# EUROPEAN PATENT APPLICATION

(11) **EP 3 293 089 A1**
(43) Date of publication of application: **14.03.2018**
(21) Application number: 17189968.5
(22) Date of filing: 07.09.2017
(51) Int. Cl.: B62D 25/08, B62D 29/00

(54) **REAR SHOCK TOWER**

(30) Priority: 07.09.2016 US 201662384298 P; 06.09.2017 US 201715697223
(71) Applicant: Thunder Power New Energy Vehicle Development Company Limited, 1 Lyndhurst Terrace Central, Hong Kong (CN)
(72) Inventor: MAIER, Jens, Central Hong Kong (CN); VIERLING, Maik, Central Hong Kong (CN)
(74) Representative: Loustalan, Paul William

(57) **Abstract**

A rear shock tower for an electric vehicle includes a front tower support positioned over a front portion of a rear wheel well of the electric vehicle. The front tower support is angled toward a rear of the electric vehicle from a lower portion to an upper portion of the front tower support. The shock tower includes a rear tower support positioned over a rear portion of the rear wheel well of the electric vehicle. The rear tower support is angled toward a front of the electric vehicle from a lower portion to an upper portion of the rear tower support. The shock tower includes a tower bridge coupling the upper portion of the front tower support and the upper portion of the rear tower support and spanning a distance between the upper portion of the front tower support and the upper portion of the rear tower support. The tower bridge may be configured to receive a mounting of a rear suspension.

## Description

### CROSS-REFERENCE TO RELATED APPLICATION

The present application claims the benefit of U.S. Provisional Application No. 62/384,298, filed September 7, 2016, the entire contents of which are hereby incorporated by reference for all purposes.

### BACKGROUND OF THE INVENTION

There are many problems unique to electric vehicles, oftentimes due to the presence of large and/or numerous batteries used to power the electric motor and other components of the vehicle. These batteries are often bulky, and add significant weight to the vehicles. These considerations present challenges in designing a particularly efficient and practical electrical vehicle. Additionally, these batteries may be particularly susceptible to damage during a collision. Damage to a battery may be especially dangerous by presenting a fire and/or corrosive hazard. As such, protecting the batteries from damage remains a difficult challenge unique to the field of electric vehicles.

Vehicle manufacturers have added a number of new structural features to vehicles to improve safety and/or performance. Many of these structural features are applicable to electric, hybrid, and non-electric vehicles equally, while others place a greater emphasis on the vehicle motor type, such as a vehicle base plate with increased thickness for protecting an electric car battery over a specific region of the vehicle. Structural improvements that increase either safety or performance without a significant compromise of the other remain important objectives of vehicle manufacturers.

Electric vehicles are becoming an increasingly viable alternative to traditional vehicles with internal combustion engines. Electric vehicles may have advantages in their compactness, simplicity of design, and in being potentially more environmentally friendly depending on the means by which the electricity used in the vehicle was originally generated. The prospect of using renewable energy sources to power automobiles in place of gasoline has obvious advantages as oil reserves across the globe become increasingly depleted.

### BRIEF SUMMARY OF THE INVENTION

In one aspect, a rear shock tower for an electric vehicle is provided. The rear shock tower may include a front tower support positioned over a front portion of a rear wheel arch of the electric vehicle. The front tower support may be angled toward a rear of the electric vehicle from a lower portion to an upper portion of the front tower support. The rear shock tower may also include a rear tower support positioned over a rear portion of the rear wheel arch of the electric vehicle. The rear tower support may be angled toward a front of the electric vehicle from a lower portion to an upper portion of the rear tower support. The rear shock tower may further include a tower bridge coupling the upper portion of the front tower support and the upper portion of the rear tower support and spanning a distance between the upper portion of the front tower support and the upper portion of the rear tower support. The tower bridge may be configured to receive a mounting of a rear suspension of the electric vehicle.

In another aspect, a rear shock tower for an electric vehicle may include a front tower support positioned over a front portion of a rear wheel arch of the electric vehicle. The front tower support may be angled toward a rear of the electric vehicle from a lower portion to an upper portion of the front tower support. The rear shock tower may also include a rear tower support positioned over a rear portion of the rear wheel arch of the electric vehicle. The rear tower support may be angled toward a front of the electric vehicle from a lower portion to an upper portion of the rear tower support. The lower portion of the front support tower and the lower portion of the rear support tower may be coupled with the rear wheel arch. The rear shock tower may further include a tower bridge configured to receive and cover the upper portion of the front tower support and the upper portion of the rear tower support, the tower bridge spanning a distance between the upper portion of the front tower support and the upper portion of the rear tower support. The tower bridge may be configured to receiving a mounting of a rear suspension of the electric vehicle. The rear shock tower may also include a metallic sheet positioned between the front tower support, the rear tower support, and the tower bridge so as to close an opening formed between the front tower support, the rear tower support, and the tower bridge.

In another aspect, a method of absorbing a force with an electric vehicle is provided. The method may include receiving a force at a rear wheel of the electric vehicle. The method may also include transferring a first force from the rear wheel to a rear shock tower via a rear suspension. The rear shock tower may include a front tower support positioned over a front portion of a rear wheel arch of the electric vehicle. The front tower support may be angled toward a rear of the electric vehicle from a lower portion to an upper portion of the front tower support. The rear shock tower may also include a rear tower support positioned over a rear portion of the rear wheel arch of the electric vehicle. The rear tower support may be angled toward a front of the electric vehicle from a lower portion to an upper portion of the rear tower support. The rear shock tower may further include a tower bridge coupling the upper portion of the front tower support and the upper portion of the rear tower support and spanning a distance between the upper portion of the front tower support and the upper portion of the rear tower support. The tower bridge may be coupled with a mounting of the rear suspension. The method may also include absorbing at least some of the force at the tower bridge and distributing at least some of the remaining force to the rear wheel arch via the front tower support and the rear tower support.

### BRIEF DESCRIPTION OF THE DRAWINGS

FIG. 1 depicts an electric vehicle according to embodiments.
FIG. 2 depicts a rear shock tower of an electric vehicle according to embodiments.
FIG. 3 depicts a top isometric view of a tower bridge of a shock tower according to embodiments.
FIG. 4 depicts a side isometric view of a tower bridge of a shock tower according to embodiments.
FIG. 5 depicts a top isometric view of a tower bridge of a shock tower according to embodiments.
FIG. 6 depicts a bottom isometric view of a tower bridge of a shock tower according to embodiments.
FIG. 7 is a flowchart depicting a method for absorbing a rear impact with an electric vehicle according to embodiments.

### DETAILED DESCRIPTION OF THE INVENTION

The subject matter of embodiments of the present invention is described here with specificity to meet statutory requirements, but this description is not necessarily intended to limit the scope of the claims. The claimed subject matter may be embodied in other ways, may include different elements or steps, and may be used in conjunction with other existing or future technologies. This description should not be interpreted as implying any particular order or arrangement among or between various steps or elements except when the order of individual steps or arrangement of elements is explicitly described.

The systems and methods described herein relate generally to improvements for electric vehicles. Due to the size and weight considerations of the batteries required to power such vehicles, as well as the need to make electric vehicles as safe as possible, each component within the electric vehicles must be designed with particular characteristics in mind. Specifically, considerations related to the weight and structural integrity of each component must be weighed to ensure that the electric vehicles are both efficient and safe to operate. For example, the body of the vehicle must be stiff, efficient, and lightweight. A lightweight body helps counteract the additional weight of the batteries, which may be in the form of several large batteries, or numerous (sometimes thousands) of smaller batteries wired together. The stiff body helps make the vehicle more stable during cornering and also helps limit damage to the body and batteries during a collision. Protection of the batteries during a collision is particular important, as the large number of batteries pose a significant fire hazard and may also expose passengers and others to highly corrosive material. Due to this high safety risk, it is imperative that the body structure be designed to withstand high force collisions from any direction.

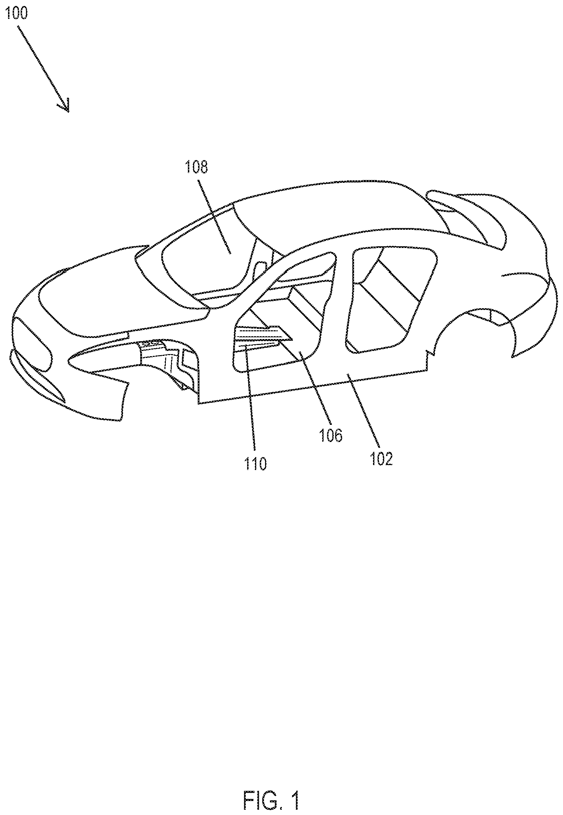

Turning now to **FIG. 1****,** one embodiment of an electric vehicle 100 is shown. While shown here as an electric automobile, electric vehicle 100 may be any motorized vehicle that is powered by electricity. For example, electric vehicle 100 may include vehicles such as cars, buses, trains, trucks, trams, watercraft, aircraft, and/or any other type of transportation mechanism.

Here, much of the main body 102 of the electric vehicle 100, especially those components designed to form the skeleton of the vehicle and those components used for collision protection, are made of aluminum or alloys containing aluminum, although it will be appreciated that other materials may be considered. Aluminum alloys provide strong, yet lightweight components that help shed weight to compensate for the high weight of the batteries necessary to power the electric vehicle. For electric vehicles, an increased emphasis is placed on protection of the batteries as damage to battery cells can cause explosion and fires within the vehicle. Such problems are compounded due to the large amount of space batteries must occupy within electric vehicles in order to maintain practical driving ranges. Therefore, vehicle alterations that provide increased protection along edges and corners of the vehicle battery are advantageous. Such alterations may include considerations related to, but not limited to providing: (1) increased rigidity of the vehicle, (2) increased absorption of energy from a collision, and (3) increased efficiency of transfer of energy/force stemming from an impact to the vehicle's body to lessen the potential impact applied to the vehicle battery and to passengers in the vehicle.

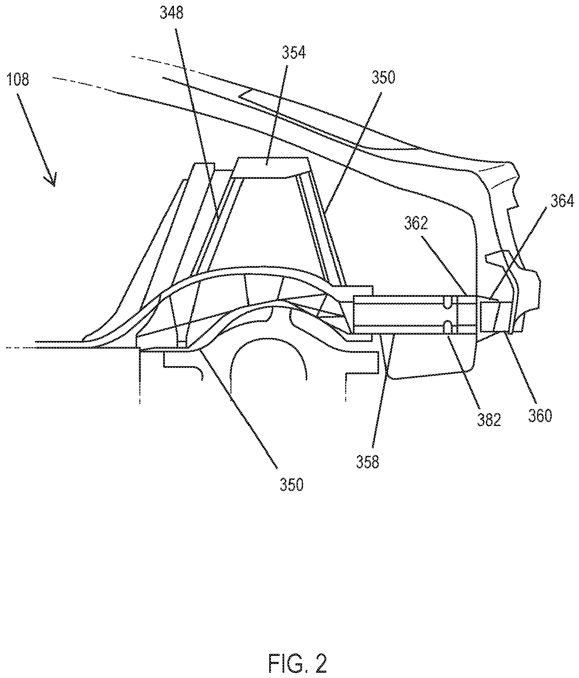

Battery elements 104 (shown in FIG. 2) are positioned underneath a floor structure 106 of the electric vehicle 100. Such positioning provides several benefits. First, the battery elements are isolated from the passenger compartment, largely by an aluminum (or other metallic material) floor structure 106, which helps increase passenger safety. The placement of the battery elements 104 underneath the vehicle 100 also allows the battery elements 104 to be connected to electrical systems of the vehicle 100 from underneath the floor structure 106. This enables the battery elements 104 to be changed out from the exterior of the vehicle 100. For example, the vehicle 100 may be raised up and the battery elements 104 may be decoupled from the underside of the vehicle 100. As just one example, a number of bolts or other fasteners may be removed and the battery elements 104 may be lowered from the vehicle 100. The battery elements 104 may be disconnected and new battery elements 104 may be connected and fastened to the underside of the vehicle 100. This allows old batteries to be replaced easily, and also enables a quick swap of depleted battery elements 104 for charged battery elements 104, serving as a method of rapidly charging the vehicle 100 for longer trips. The placement of the battery elements 104 also places much of the weight of the vehicle 100 near the ground, thus lowering the center of gravity of the vehicle 100, which allows the vehicle 100 to corner better and reduces the odds of a rollover.

Unlike automobiles that utilize internal combustion engines and include drivetrains that extend along a length of the vehicle, electric vehicle 100 is driven by one or more electric motors positioned near the wheel axles. As a result, there is no need for a longitudinal drive train. To help isolate a passenger compartment 108 from the battery elements 104 while providing access for connections of the battery elements 104 to be connected to electric systems within the passenger compartment 108 and to the one or more electric motors, the passenger compartment may be provided with a rigid tunnel 110 protruding upward from a floor structure 106 of the passenger compartment 108. However, unlike in conventional gas-powered vehicles where a tunnel may be provided to provide clearance for a drivetrain, rigid tunnel 110 is included to provide clearance for a portion of the battery elements 104 used to supply power to the electric vehicle 100. The rigid tunnel 110 may not only provide a housing for a portion of the battery assembly, but may serve a number of other functions. As just one example, the rigid tunnel 110 may help absorb and transfer force away from passengers in the event of a collision. In such embodiments, the rigid tunnel 110 may be formed of carbon fiber or another composite material that is extremely strong and lightweight. In other embodiments, the rigid tunnel 110 may serve as part of an air ventilation system, with hot or cold air being vented to the passenger compartment 108 through a portion of the rigid tunnel 110.

**FIG. 2** depicts a rear shock tower of the electric vehicle 100. The rear shock tower may include a front tower support 348 positioned over a front portion of a rear wheel arch 350 of the electric vehicle 100. The front tower support 348 is angled toward a rear of the electric vehicle 100 from a lower portion to an upper portion of the front tower support 348. In some embodiments, the front tower support 348 may define a rear wall of the passenger compartment 108. For example, the front tower support may be a support beam that is coupled with a rear seat back and that serves as a support to maintain a position of the rear seat assembly. The rear shock tower may also include a rear tower support 352 positioned over a rear portion of the rear wheel arch 350. The rear tower support 352 may be angled toward a front of the electric vehicle 100 from a lower portion to an upper portion of the rear tower support 352 such that tops of the front tower support 348 and the rear tower support 352 are angled toward one another. Top ends of the front tower support 348 and the rear tower support 352 may be coupled together using a tower bridge 354. Tower bridge 354 spans a distance between the upper end of the front tower support 348 and the upper end of the rear tower support 352. In some embodiments, the lower ends of both the front tower support 348 and the rear tower support 352 are coupled with the rear wheel arch 350. For example, the lower portion of the front tower support 348 and the lower portion of the rear tower support 352 are coupled with a top surface of the rear wheel arch 350 using a plurality of fasteners extending through exclusions formed in the lower portion of the front tower support 348 and the lower portion of the rear tower support 352.

Vehicle 100 may have a rear shock tower positioned over each rear well arch 350. These shock towers may be coupled with one another, such as by a cross beam 356 that extends between the tower bridges 354 of the two shock towers. The primary purpose of each shock tower is to provide a securement site for a mounting of the rear suspension and axle. For example, each tower bridge 354 may be configured to receive and secure a mounting of the suspension, such as a shock absorber. The rear shock towers also provide force transfer mechanisms to help the vehicle handle bumps while driving. For example, the shock towers may disperse forces through one another via the connection through the connecting cross beam. The rear shock towers may also disperse some of the force to wheel arches 350 and the rest of the chassis 292 via front tower support 348 and rear tower support 352. The connection between the suspension and the rear shock towers allows for movement of the wheel of vehicle 100 upward toward rear wheel arch 350 during the absorption of bumps and dips in the road.

The rear shock tower may be generally trapezoidal in shape, with a top of the trapezoidal shape defined by the tower bridge 354, sides of the trapezoidal shape defined by the front tower support 348 and the rear tower support 352, and a base of the trapezoidal shape defined by the rear wheel arch 350. In some embodiments, additional angular support beams may be included to form a truss structure within the trapezoidal shape to provide additional strength to the rear shock tower.

The rear shock tower may be configured to absorb and transfer force in a manner to protect the battery elements 104 and/or the passenger compartment 108 in the event of bumps and/or dips encountered by the vehicle 100. To aid in the absorption of force, the components of the rear shock tower may be formed of aluminum or aluminum alloys. The use of aluminum, rather than a more rigid material such as steel, not only reduces the weight of the vehicle 100, but also allows more of the energy from bumps and/or dips to be absorbed. To further stiffen the rear crash towers and to aid in handling larger forces, each of the front tower support 348 and the rear tower support 352 defines an interior having a number of ribs extending along a length of the respective support. The ribs may extend through the entire interior to couple multiple walls of the support together, thus providing additional material and material thickness to absorb and transfer greater forces. For example, the front tower support 348 and the rear tower support 352 may each include one or more ribs extending from the front wall to a rear wall. To facilitate the formation of the ribs, the front tower support 348 and rear tower support 352 may be extruded from aluminum such that the ribs are formed along with the outer walls of the respective tower support. In some embodiments, connection points between the ribs and the outer walls of the tower support may taper outward such that a thickness near the connection point is greater than a thickness of the rest of the ribs. Similarly, junctions of the ribs one another may also have greater thicknesses than the rest of the ribs. Due to its more complex and non-uniform structure, the tower bridge 354 may be formed of pressed or cast aluminum. The rear wheel arches 350 may also be formed of pressed or cast aluminum or steel to allow for the production of an intricate rib structure within the rear wheel arches 350 to add additional strength and rigidity.

In some embodiments, the rear shock tower may include a metallic sheet (not shown) positioned between the front tower support 348, the rear tower support 352, and the tower bridge 354 so as to close an opening formed between the components. The metallic sheet may include one or more embossed portions, ribs, and/or other profiles extending along a length and/or formed within a face of the metallic sheet. Such formations increase the stiffness of the metallic sheet.

Each rear wheel arch 350 may be coupled with a rear crash system of the vehicle 100. For example, each rear wheel arch 350 may be coupled with the rear crash beam 358 of the electric vehicle 100. For example, the rear wheel arch 350 may define a receptacle and/or flange that is configured to receive a front end of the rear crash beam 358. The rear crash beam 358 may be bolted, welded, and/or otherwise secured within the rear wheel arch 350, such as by fastening an outer surface of the rear crash beam 358 to an interior surface of the rear wheel arch 350. The rear crash beams 358 may extend rearward toward a bumper 360 of the electric vehicle 100. The rear crash beams 358 may be coupled with the bumper 360 via one or more intervening components. For example, each rear crash beam 358 may be coupled with a bumper mount 362. This may be done my inserting a rear end of the rear crash beam 358 into a receptacle, flange, and/or bracket of the bumper mount 362. In other embodiments, the rear crash beam 358 may be positioned such that a rear end of the rear crash beam 358 abuts a front edge of the bumper mount 362, with a securement mechanism being used to couple the component ends together. In some embodiments, the bumper mount 362 may be coupled with a rear crash element 364, which is in turn coupled with the bumper 360. In some embodiments, the rear crash beam 358 may define a number of dimples 382. Dimples 382 help initiate an accordion-like crumpling of the rear crash beam 358 in the event of a rear collision. For example, upon impact, a rear edge of the rear crash beam 358 may be forced toward the dimples 382. The dimples 382 allow the rear edge to be more easily pushed directly toward the main beam 358 such that the beam 358 crumples largely along its longitudinal axis (rather than at an angle relative to the axis), thus absorbing a maximum amount of force.

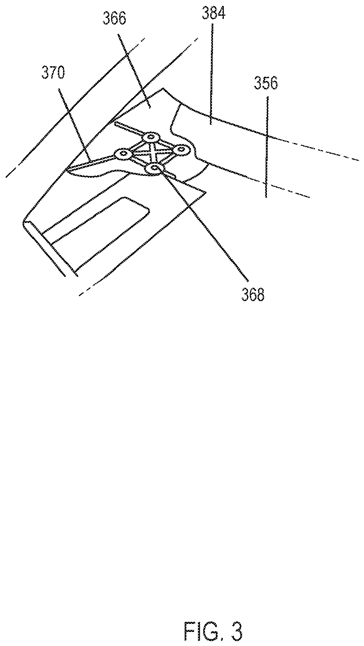

**FIG. 3****.** shows a top isometric view of the tower bridge 354. The tower bridge 354 is shown coupled with cross beam 356, which extends across a width of the vehicle 100 and is coupled with a tower bridge 354 for the other rear shock tower. Additional components may be attached with the tower bridge 354. For example, a header section 384 may be coupled with a forward edge of the tower bridge 354. In some embodiments, the header section 384 may form and/or support a shelf-like surface above and behind the rear seats and may serve as a support for various components of the vehicle 100, such as a mounting site for one or more rear speakers, a brake light, and/or other components. Other components and support structures may be coupled with the tower bridge 354 to fix the rear shock tower and make the tower more solid. A top surface 366 of tower bridge 354 may define a number of apertures 368 that are configured to receive fasteners, such as bolts, to secure a mounting of a suspension member to the tower bridge 354. The top surface 366 may also define a number of embossed ribs or protrusions 370. For example, the ribs 370 may extend between the apertures 368, such as by forming a box pattern with an X in the middle formed between four apertures 368 in a square arrangement. Additional ribs 370 may be provided. For example, ribs 370 may be included that extend from an area proximate a mounting site for the suspension to areas of the top surface 366 that are far away from the mounting site. The ribs 370 may serve to increase the strength and rigidity of the tower bridge 154 to allow the component to withstand higher forces applied via the suspension.

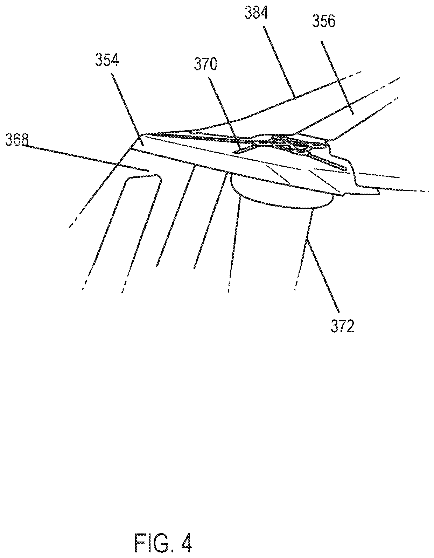

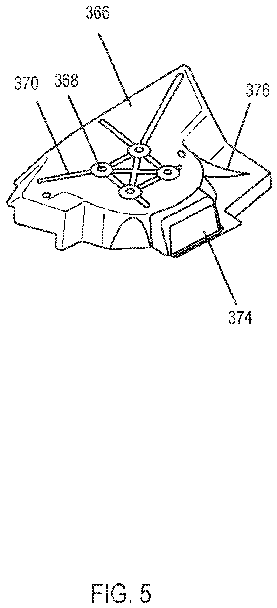

**FIG. 4** shows a side view of the tower bridge 354. A suspension member 372, such as a mounting for a shock absorber, is shown positioned against and coupled with an underside of the tower bridge 354 just rearward of front tower support 348. Fasteners, such as bolts, may be inserted through apertures 368 and into the mounting of the suspension member 372. **FIG. 5** shows a top isometric view of the tower bridge 354. An inner portion of the tower bridge 354 defines a chamber 374 that is configured to receive the cross beam 356 for coupling the left rear shock tower with the right rear shock tower. Cross beam 356 may have a generally rectangular (or other shaped) profile and may be configured to be inserted within the chamber 374, where the cross beam 356 may be secured, using mechanical fasteners, adhesives, press fit connections, welding, and/or other securement mechanisms. In some embodiments, the cross member 356 may include an inner member that is configured to be inserted within the chamber 374, while an outer sleeve of the cross member is configured to encircle an outer wall of chamber 374. In yet other embodiments, the tower bridge 354 may not include a chamber 374 and may instead define a nub or other projection that is configured to be inserted within a corresponding opening within the cross beam 356. Top surface 362 of tower bridge 354 may also include a mounting position for the header section 384. For example, a portion of the top surface 362 may be depressed to receive the header section 384, which may have an edge with a shape corresponding to that of a higher section of the top surface 362 such that when coupled the header section 384, cross member 356, and top surface 362 form a generally planar, flush surface. In some embodiments, one or more fins or other supports 376 may be provided on top surface 362 that extend between the lower portion and the higher section to further strengthen the wall connecting the two sections.

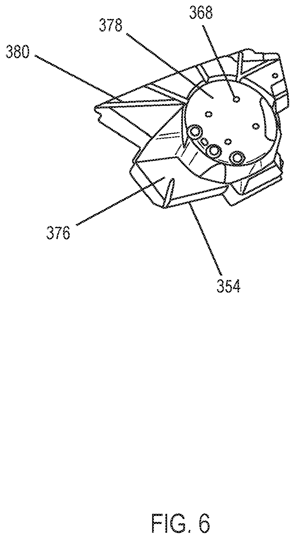

**FIG. 6** shows a bottom isometric view of the tower bridge 354. A lower surface 376 of tower bridge 354 defines an mounting area 378 that is shaped and sized to receive the mounting of suspension member 372. For example, the mounting area 378 may be circular in shape to receive a circular mounting of the suspension member 372. Lower surface 376 further defines a second plurality of embossed ribs 380 that extend outward from the mounting area 378 to an outer periphery of the tower bridge 354. These ribs 380 further strengthen the lower surface 376.

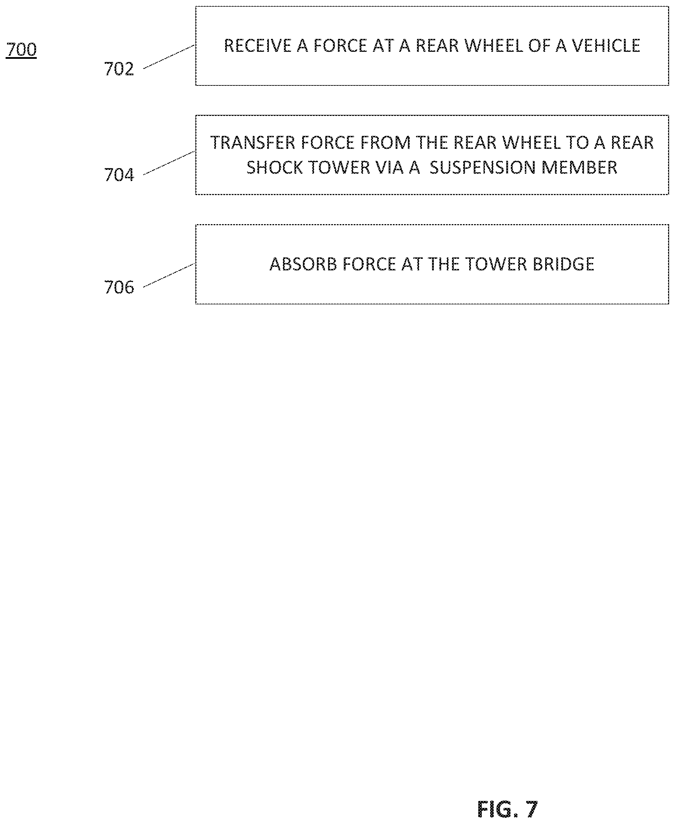

**FIG. 7** is a flowchart depicting a process 700 for absorbing a rear impact with an electric vehicle. Process 700 may be performed using the electric vehicle 100 described herein. Process 700 may begin at block 702 by receiving a force at a rear wheel of the electric vehicle. For example, the rear wheel may encounter a change in elevation of the road, such as a bump or dip, and/or a curve that causes the magnitude of forces applied to at least one rear wheel to change. In some embodiments, this may cause the rear wheel to move toward the rear wheel arch, with a suspension member operating to absorb and disperse excessive forces. At block 704 a first force may be transferred from the rear wheel to a rear shock tower via a rear suspension. For example, the rear suspension may include a shock absorber and/or other suspension mechanisms that are coupled with a tower bridge of the rear shock tower. The tower bridge may be mounted atop an upper portion of a front tower support and an upper portion of a rear tower support and spanning a distance between the upper portion of the front tower support and the upper portion of the rear tower support. The front tower support may be positioned over a front portion of a rear wheel arch of the electric vehicle. The front tower support may be angled toward a rear of the electric vehicle from a lower portion to an upper portion of the front tower support. The rear tower support may be positioned over a rear portion of the rear wheel arch of the electric vehicle. The rear tower support may be angled toward a front of the electric vehicle from a lower portion to an upper portion of the rear tower support. At block 706, process 700 may include absorbing at least some of the force at the tower bridge and distributing at least some of the remaining force to the rear wheel arch via the front tower support and the rear tower support. For example, some of the force may be transmitted from the tower bridge down through one or both of the tower supports and into the rear wheel arch. The rear wheel arch and the components, such as the chassis, that are coupled with the wheel arch are sufficiently massive to help disperse and absorb road forces encountered during normal driving conditions.

The design of the rear shock tower may help handle larger forces. For example, a trapezoidal shape of the rear shock tower provides a strong, stable platform on which to mount the suspension member. Additionally, by coupling the shock towers to one another and the wheel arches, the shock tower is sufficiently rigid to handle road forces without yielding or deforming noticeably. In some embodiments, the rear shock tower may include a metallic sheet positioned between the front tower support, the rear tower support, and the tower bridge so as to close an opening formed between the front tower support, the rear tower support, and the tower bridge, thereby providing additional structural rigidity to the rear shock tower. In some embodiments, the tower bridge may also include a number of ribs formed within a top surface of the tower bridge, with at least some of the ribs extending between apertures within the top surface that are configured to receive fasteners for securing the tower bridge with the mounting of the rear suspension. These ribs help further strengthen the tower bridge, while allowing less metal material to be used, thus helping to cut down on weight and material costs.

It should be noted that the systems and devices discussed above are intended merely to be examples. It must be stressed that various embodiments may omit, substitute, or add various procedures or components as appropriate. Also, features described with respect to certain embodiments may be combined in various other embodiments. Different aspects and elements of the embodiments may be combined in a similar manner. Also, it should be emphasized that technology evolves and, thus, many of the elements are examples and should not be interpreted to limit the scope of the invention.

Specific details are given in the description to provide a thorough understanding of the embodiments. However, it will be understood by one of ordinary skill in the art that the embodiments may be practiced without these specific details. For example, well-known structures and techniques have been shown without unnecessary detail in order to avoid obscuring the embodiments. This description provides example embodiments only, and is not intended to limit the scope, applicability, or configuration of the invention. Rather, the preceding description of the embodiments will provide those skilled in the art with an enabling description for implementing embodiments of the invention. Various changes may be made in the function and arrangement of elements without departing from the spirit and scope of the invention.

Having described several embodiments, it will be recognized by those of skill in the art that various modifications, alternative constructions, and equivalents may be used without departing from the spirit of the invention. For example, the above elements may merely be a component of a larger system, wherein other rules may take precedence over or otherwise modify the application of the invention. Also, a number of steps may be undertaken before, during, or after the above elements are considered. Accordingly, the above description should not be taken as limiting the scope of the invention.

Also, the words "comprise", "comprising", "contains", "containing", "include", "including", and "includes", when used in this specification and in the following claims, are intended to specify the presence of stated features, integers, components, or steps, but they do not preclude the presence or addition of one or more other features, integers, components, steps, acts, or groups.

## Claims

1. A rear shock tower for an electric vehicle, the rear shock tower comprising:
a front tower support positioned over a front portion of a rear wheel well of the electric vehicle, the front tower support being angled toward a rear of the electric vehicle from a lower portion to an upper portion of the front tower support;
a rear tower support positioned over a rear portion of the rear wheel well of the electric vehicle, the rear tower support being angled toward a front of the electric vehicle from a lower portion to an upper portion of the rear tower support; and
a tower bridge coupling the upper portion of the front tower support and the upper portion of the rear tower support and spanning a distance between the upper portion of the front tower support and the upper portion of the rear tower support, the tower bridge being configured to receive a mounting of a rear suspension of the electric vehicle.

2. The rear shock tower for an electric vehicle of claim 1, wherein:
the front tower support and the rear tower support comprise one or both of extruded aluminum or cast aluminum; and / or
wherein, the tower bridge comprises cast aluminum.

3. The rear shock tower for an electric vehicle of claim 1 or 2, further comprising:
a metallic sheet positioned between the front tower support, the rear tower support, and the tower bridge so as to close an opening formed between the front tower support, the rear tower support, and the tower bridge.

4. The rear shock tower for an electric vehicle of claim 1, 2 or 3, wherein:
the tower bridge defines a chamber that is configured to receive a support beam that extends across a width of the electric vehicle and couples with an additional rear shock tower.

5. The rear shock tower for an electric vehicle of any of the preceding claims, wherein:
the front tower support is coupled with a rear seat structure of a passenger compartment of the electric vehicle,
and / or
wherein:
the lower portion of the front support tower and the lower portion of the rear support tower each comprise a number of exclusions; and
the lower portion of the front support tower and the lower portion of the rear support tower are secured to the rear wheel arch using fasteners extending through the number of exclusions.

6. A rear shock tower for an electric vehicle, the rear shock tower comprising:
a front tower support positioned over a front portion of a rear wheel well of the electric vehicle, the front tower support being angled toward a rear of the electric vehicle from a lower portion to an upper portion of the front tower support;
a rear tower support positioned over a rear portion of the rear wheel well of the electric vehicle, the rear tower support being angled toward a front of the electric vehicle from a lower portion to an upper portion of the rear tower support, wherein the lower portion of the front support tower and the lower portion of the rear support tower are coupled with the rear wheel well;
a tower bridge configured to receive and cover the upper portion of the front tower support and the upper portion of the rear tower support, the tower bridge spanning a distance between the upper portion of the front tower support and the upper portion of the rear tower support, the tower bridge being configured to receive a mounting of a rear suspension of the electric vehicle; and
a metallic sheet positioned between the front tower support, the rear tower support, and the tower bridge so as to close an opening formed between the front tower support, the rear tower support, and the tower bridge.

7. The rear shock tower for an electric vehicle of claim 6, wherein:
the tower bridge defines a chamber that is configured to receive a support beam that extends across a width of the electric vehicle and couples with an additional rear shock tower.

8. The rear shock tower for an electric vehicle of claim 6 or 7, wherein:
the rear shock tower is generally trapezoidal in shape, with a top of the trapezoidal shape defined by the tower bridge, sides of the trapezoidal shape defined by the front tower support and the rear tower support, and a base of the trapezoidal shape defined by the rear wheel arch.

9. The rear shock tower for an electric vehicle of claim 6, 7 or 8, wherein:
the lower portion of the front support tower and the lower portion of the rear support tower are coupled with the rear wheel arch using a plurality of fasteners extending through exclusions formed in the lower portion of the front support tower and the lower portion of the rear support tower.

10. The rear shock tower for an electric vehicle of any of claims 6 to 9, wherein:
the front tower support and the rear tower support comprise one or both of extruded aluminum or cast aluminum.

11. The rear shock tower for an electric vehicle of any of claims 6 to 10 wherein:
the tower bridge comprises a plurality of ribs formed within a top surface of the tower bridge, wherein optionally:
at least some of the plurality of ribs extend between apertures within the top surface that are configured to receive fasteners for securing the tower bridge with the mounting of the rear suspension.

12. A method of absorbing a force with an electric vehicle, the method comprising:
receiving a force at a rear wheel of the electric vehicle;
transferring a first force from the rear wheel to a rear shock tower via a rear suspension, the rear shock tower comprising:
a front tower support positioned over a front portion of a rear wheel arch of the electric vehicle, the front tower support being angled toward a rear of the electric vehicle from a lower portion to an upper portion of the front tower support;
a rear tower support positioned over a rear portion of the rear wheel arch of the electric vehicle, the rear tower support being angled toward a front of the electric vehicle from a lower portion to an upper portion of the rear tower support; and
a tower bridge coupling the upper portion of the front tower support and the upper portion of the rear tower support and spanning a distance between the upper portion of the front tower support and the upper portion of the rear tower support, the tower bridge being coupled with a mounting of the rear suspension;
absorbing at least some of the force at the tower bridge and distributing at least some of the remaining force to the rear wheel arch via the front tower support and the rear tower support.

13. The method of absorbing a force with an electric vehicle of claim 12, further comprising:
moving the rear wheel toward the rear wheel arch as the at least some of the force is absorbed by the tower bridge.

14. The method of absorbing a force with an electric vehicle of claim 12 or 13, wherein:
the tower bridge comprises a plurality of ribs formed within a top surface of the tower bridge, wherein optionally:
at least some of the plurality of ribs extend between apertures within the top surface that are configured to receive fasteners for securing the tower bridge with the mounting of the rear suspension.

15. The method of absorbing a force with an electric vehicle of claim 12, 13 or 14, wherein:
the rear shock tower comprises a metallic sheet positioned between the front tower support, the rear tower support, and the tower bridge so as to close an opening formed between the front tower support, the rear tower support, and the tower bridge and to provide additional structural rigidity to the rear shock tower,
and / or
wherein:
the front tower support and the rear tower support comprise one or both of extruded aluminum or cast aluminum; and
the tower bridge comprises cast aluminum.
